# DEMANDE DE BREVET EUROPEEN

(11) **EP 4 725 311 A1**
(43) Date de publication de la demande: **15.04.2026**
(21) Numéro de dépôt: 25208153.4
(22) Date de dépôt: 10.10.2025
(51) Int. Cl.: A01M 9/00, A01M 1/20, A01M 3/00, B05B 7/14

(54) **DISPOSITIF DE PULVÉRISATION OU DE PROJECTION DE MATÉRIAU PULVÉRULENT, FRAGMENTAIRE OU LIQUIDE**

(30) Priorité: 11.10.2024 FR 2411041
(71) Demandeur: Vespikill, 37110 Les Hermites (FR)
(72) Inventeur: CHAUVET, Fabien, 37110 LES HERMITES (FR)
(74) Mandataire: Aupetit, Muriel J. C.

(57) **Abrégé**

Dispositif (1) de pulvérisation ou de projection pour matériau pulvérulent ou en paillettes ou du type fragmentaire, voire même liquide, pouvant être aéroporté, le dispositif comportant d'amont en aval :
- un bloc d'air pulsé (2) fournissant de l'air comprimé,
- une chambre (3) logeant un réservoir (30) destiné à accueillir du matériau à pulvériser,
- une cheminée (4) aval de projection communiquant avec le réservoir (30),
- le dispositif comportant un circuit (31) d'écoulement d'air comprimé, le circuit (31) communiquant avec le bloc d'air pulsé (2) et étant agencé et prisonnier de l'intérieur de la chambre (3) tout en étant à l'extérieur du réservoir (30) et s'étendant sur la longueur du réservoir et tout autour de celui-ci, tandis que le réservoir (30) comprend des passages traversants (300) qui débouchent dans le circuit d'écoulement d'air (31).

## Description

L'invention concerne un dispositif de pulvérisation ou de projection pour matériau pulvérulent ou en paillettes ou autre matériau fragmentaire, voire même liquide, pouvant être aéroporté.

L'invention sera plus particulièrement décrite quant à un dispositif de pulvérisation pour produit pulvérulent du type insecticide, en particulier pour la destruction de nid de guêpes ou de frelons, sans toutefois y être limitée. Une autre application est par exemple la projection de confettis. De manière générale, l'invention s'applique à toutes particules ou corps fragmentaires aptes à être portés par l'air.

Dans l'application de pulvérisation d'insecticide pour frelons et autres, un dispositif connu comprend une cartouche de poudre insecticide, une buse de pulvérisation se connectant sur l'aval de la cartouche, une perche avec conduit qui se connecte en amont de la cartouche, et un pistolet avec cartouche d'air comprimé permettant de délivrer de l'air comprimé dans le conduit de la perche jusqu'à la cartouche.

Cependant, un tel dispositif nécessite d'avoir toujours à disposition des cartouches d'air comprimé. Par ailleurs, il est recherché de pouvoir doser la quantité effectivement utile d'insecticides pour minimiser l'impact environnemental de tels produits, ce qui n'est pas toujours le cas.

On connait du brevet EP3982722 un dispositif de traitement de nid de frelons utilisant des cartouches ou dosettes calibrées pour s'adapter à la quantité utile d'insecticide. Pour le fonctionnement du dispositif, la cartouche de dosage approprié est introduite dans le dispositif, ce qui automatiquement la perce en amont et en aval. Quant à l'air comprimé, il est fourni par une pompe à air à fut cylindrique qui se connecte par des tuyaux au dispositif, la délivrance d'air comprimé étant contrôlée par l'ouverture/fermeture d'une vanne intelligente qui est pilotée à distance.

Toutefois, même si chaque cartouche peut être calibrée, le dispositif précité exige une pompe à air comprimé, voire même un compresseur, ce qui est encombrant et n'est pas pratique sur le terrain.

On connaît par ailleurs du brevet EP2987404, un dispositif de projection d'un agent chimique en poudre qui est pulvérisé grâce à un gaz sous pression obtenu par réaction d'un agent générateur de gaz dans un liquide. En particulier, le gaz sous pression est du dioxyde de carbone obtenu à partir de bicarbonate de sodium et d'acide citrique mélangé à de l'eau. Cependant, ce dispositif est complexe de conception et nécessite un contenant étanche à l'eau et rempli d'eau, ce qui n'est pas du tout commode.

Par ailleurs, indépendamment du système permettant la projection d'une matière pulvérulente ou liquide, il est connu du brevet EP1425235 une lance de pulvérisation pour projeter à distance et dont l'extrémité libre est pourvue d'un accessoire que l'on peut changer selon la nature de l'utilisation.

L'invention a donc pour but de proposer un dispositif de pulvérisation, notamment d'insecticide, qui ne présente pas les inconvénients précités et qui d'une manière générale quel que soit le matériau projeté, puisse être d'encombrement réduit, de mis en œuvre simple, tout en étant efficace dans sa propulsion et en pouvant s'adapter à la quantité requise de matériau.

Dans la suite de la description, les qualificatifs « amont » et « aval » s'entendent par des éléments du dispositif situés en amont ou en aval par rapport au corps du dispositif en considérant le sens de pulvérisation du matériau d'amont en aval.

Selon l'invention, le dispositif de pulvérisation ou de projection pour matériau pulvérulent (produit en poudre, notamment insecticide) ou en paillettes ou du type fragmentaire, voire même pour produit liquide, pouvant être aéroporté, est conforme à la revendication 1. En particulier, le dispositif comporte d'amont en aval :
- des moyens d'alimentation d'un gaz (de l'air) comprimé,-
- un réservoir destiné à accueillir (à stocker provisoirement) du matériau à pulvériser,
- une cheminée aval de projection communiquant avec le réservoir,
- le réservoir étant logé dans une chambre qui est agencée entre les moyens d'alimentation en gaz (air) comprimé et la cheminée, et
- les moyens d'alimentation en gaz comprimé comportant un bloc fournissant le gaz comprimé et un circuit d'écoulement de gaz (d'air) comprimé, le circuit communiquant avec le bloc et étant agencé et prisonnier de l'intérieur de la chambre tout en étant à l'extérieur du réservoir et s'étendant sur la longueur du réservoir et tout autour de celui-ci, tandis que le réservoir comprend des passages traversants qui débouchent dans le circuit d'écoulement d'air, caractérisé en ce que
le gaz comprimé est de l'air ambiant et le bloc fournissant l'air comprimé est un bloc d'air pulsé qui comporte un système d'aspiration et de soufflerie d'air comprenant au moins une arrivée d'air extérieur ambiant et une sortie d'expulsion d'air qui communique avec la chambre. On entend par système d'aspiration et de soufflerie d'air, un système comprenant notamment un moteur et une turbine.

Avantageusement, le dispositif se présente sous la forme d'un ensemble longiligne et intègre les moyens d'alimentation en air comprimé. Avantageusement, le dispositif est dépourvu de tuyaux extérieurs d'alimentation en air comprimé à connecter. Avantageusement, le dispositif pour son fonctionnement forme un ensemble monobloc. Avantageusement, le dispositif n'a pas nécessairement besoin d'être ouvert pour charger le matériau dans le réservoir.

Selon une caractéristique, le bloc d'air pulsé comporte un système d'aspiration et de soufflerie d'air et comprend au moins une arrivée d'air (d'air extérieur ambiant) et une sortie d'expulsion d'air (qui est agencée en une extrémité aval du bloc) qui communique avec la chambre.

Selon une caractéristique, la chambre comporte une paroi externe. Selon une caractéristique, la chambre et est ouverte en ses deux extrémités amont et aval, en particulier est ouverte sur la totalité de sa section qui est cylindrique creuse.

Selon une caractéristique, le réservoir est de forme cylindrique. Selon une caractéristique, le réservoir comprend un fond fermé (le fond correspondant à l'extrémité dite amont du réservoir), une paroi dite interne qui est à distance de la paroi externe de la chambre, et une extrémité aval communiquant avec la cheminée (l'extrémité aval correspondant à la totalité de la section intérieure cylindrique creuse du réservoir). Selon une caractéristique, le circuit d'écoulement d'air comprend au moins un canal d'écoulement d'air, de préférence plusieurs canaux d'écoulement d'air répartis autour du réservoir, chaque canal présentant une extrémité distale amont en communication avec le bloc d'air pulsé et une partie longitudinale dans laquelle débouchent les passages traversants.

Avantageusement, le système d'aspiration et de soufflerie d'air est commandable à distance (via une télécommande qui communique à distance avec le circuit électronique du système d'aspiration et de soufflerie d'air). Le système d'aspiration et de soufflerie d'air peut aussi être commandé par au moins un bouton disposé directement sur le dispositif.

Le dispositif de pulvérisation de l'invention est avantageusement de corps général cylindrique et une fois le réservoir rempli d'une dose idoine de matériau, le dispositif est directement prêt à fonctionner en l'ayant si besoin préalablement fixé sur une perche et/ou en ayant accessoirisé la cheminée, par exemple par l'ajout d'un aiguillon dans le cadre d'une utilisation de lutte contre un nid de guêpes ou de frelons. La perche qui est de préférence amovible peut être fixée en terminaison libre du bloc d'air pulsé, à l'opposé de la sortie d'expulsion d'air (le bloc d'air pulsé communique alors directement avec la chambre contenant le matériau). En variante, la perche qui est amovible et qui est nécessairement creuse en présentant deux extrémités distales amont et aval ouvertes ou percées (selon la section du corps longitudinal de la perche), est fixée de manière amovible entre le bloc d'air pulsé et la chambre, les deux extrémités distales amont et aval ouvertes ou percées communiquant respectivement avec, le bloc d'air pulsé et la chambre ; dans cette configuration l'air du bloc d'air pulsé chemine d'abord à travers la perche avant de déboucher dans la chambre.

Ainsi, contrairement à l'art antérieur, le dispositif utilise de l'air comprimé à partir d'air pulsé et non d'air comprimé issu d'un dispositif spécifique de distribution d'air comprimé du type pompe à air ou compresseur. L'air utile au fonctionnement du dispositif de l'invention est directement l'air ambiant capté par le système d'aspiration du dispositif. Le dispositif est donc peu encombrant et n'a pas à être relié à des tuyaux ni à un dispositif supplémentaire de distribution d'air comprimé. Il est facile à manipuler, en particulier par sa forme générale cylindrique. Ce dispositif qui est nomade est facile à emporte, notamment dans des zones difficiles d'accès. En outre, il est possible à tout moment de stopper la pulvérisation en stoppant immédiatement le système pulsé sans pour autant avoir vidé complètement le réservoir, ce qui est quasiment impossible à obtenir avec un dispositif de l'art antérieur qui utilise un dispositif déporté d'air comprimé, ce dernier vidant extrêmement rapidement le réservoir. Par conséquent, l'utilisateur du dispositif de l'invention peut recommencer à pulvériser immédiatement après la première utilisation puisque le réservoir n'aura pas été vidé. De plus, le réservoir n'a pas besoin d'être changé comme une cartouche, il reste à demeure et il suffit de le charger de la quantité juste utile de matériau. Par ailleurs, l'air comprimé obtenu par le système de soufflerie du système d'air pulsé reste en compression grâce à l'aménagement du circuit ou chemin d'écoulement d'air. Enfin, les inventeurs ont montré que de manière surprenante, la conception de la chambre avec un circuit d'acheminement d'air périphérique au réservoir et dont une partie débouche par des passages qui traversent la paroi cylindrique du réservoir (plutôt qu'une arrivée d'air depuis le fond du réservoir comme dans l'art antérieur), procure un phénomène d'érosion pour des particules en poudre ou particules granuleuses et une projection du matériau en dehors de la cheminée, qui est davantage sous forme de brouillard de particules, plutôt que sous la forme d'un jet unidirectionnel. Cela présente en particulier l'avantage de diffuser bien plus rapidement le produit insecticide au sein d'un nid de frelons. La combinaison du bloc pulsé et du circuité d'écoulement d'air et des passages traversants dans le réservoir, procure un dispositif puissant d'éjection, et permet de doser le matériau juste nécessaire, ce qui est primordial pour de l'insecticide dont la dose est toujours à optimiser.

La commande à distance permet une application sûre et efficace du produit sans intervention manuelle directe sur le nid, augmentant ainsi la sécurité de l'opérateur.

Selon une caractéristique, le réservoir comprend un fond fermé, une paroi dite interne qui est à distance de la paroi externe de la chambre (le circuit d'écoulement d'air étant entre la paroi externe et la paroi interne) et une extrémité aval communiquant avec la cheminée, et le circuit d'écoulement d'air comprend une pluralité de canaux longitudinaux d'écoulement d'air ménagés dans l'épaisseur de la paroi interne et selon la longueur du réservoir, les canaux longitudinaux comprenant une partie communiquant avec une sortie d'expulsion d'air du bloc d'air pulsé et une partie comprenant les passages traversants, les deux parties du canal étant cloisonnées sauf en une extrémité qui est opposée à la sortie d'expulsion d'air.

Selon une caractéristique, les passages traversants sont des fentes espacées qui sont disposées sur le pourtour du réservoir et qui sont étagées selon la longueur du réservoir.

Selon une caractéristique, chaque canal d'écoulement d'air dessine un canal longitudinal en U retourné, avec
- une première aile qui part de l'extrémité amont de la chambre en communication avec la sortie d'expulsion d'air, qui est à paroi fermée avec la paroi du réservoir (cette première aile est dépourvue de passages traversants avec le réservoir) et qui s'étend selon la longueur du réservoir (selon donc un couloir) jusqu'à l'extrémité de la courbure du U (dont la paroi et fermée),
- une seconde aile (second couloir) qui est dans la continuité de la courbure du U et est parallèle à la première aile, et qui (la paroi de la seconde aile qui correspond à la paroi interne du réservoir) comprend les passages traversants et qui s'étend le long du réservoir en se terminant en extrémité amont de la chambre de manière obturée. L'air propulsé par le système pulsé qui est déjà en partie comprimé, chemine d'abord le long de la première aile à paroi fermée avec le réservoir et dont la section plus étroite que la sortie d'expulsion permet encore d'augmenter la vitesse de l'air et de le comprimer, puis en arrivant dans la seconde aile, va passer tour au tour par chaque fente étagée d'aval en amont en propulsant le matériau au fur et à mesure depuis le haut (partie aval) du réservoir jusqu'en bas en terminant par la fente la plus basse du réservoir.

De préférence, les fentes qui sont disposées à proximité du fond du réservoir, au moins pour les fentes de l'étage le plus proche du fond, présentent une section plus grande que la section des autres fentes.

Selon une caractéristique, le bloc d'air pulsé comporte un système d'aspiration et de soufflerie d'air qui comprend un moteur, une turbine et des moyens électroniques de pilotage et de contrôle à distance.

Selon une caractéristique, le bloc d'air pulsé, en particulier le système d'aspiration et de soufflerie d'air, comporte au moins une arrivée d'air qui est couplée à un filtre à air.

Selon une caractéristique, la cheminée est convergente vers l'aval, à la manière d'une tuyère.

Selon une caractéristique, le bloc d'air pulsé, la chambre, et la cheminée sont amovibles, et de préférence le réservoir est démontable par rapport à la chambre. Tous les éléments peuvent ainsi être aisément nettoyés.

Selon une caractéristique, la cheminée présente une extrémité aval (depuis laquelle est propulsé le matériau) qui comporte des moyens de fixation amovible, notamment par vissage ou par aimantation, pour la fixation d'un accessoire choisi parmi des accessoires qui sont fonction de l'utilisation du dispositif, tels que des aiguillons rigides, flexibles pour le traitement de nid de frelons ou de guêpes.

Selon une caractéristique, la cheminée présente une extrémité aval (depuis laquelle est propulsé le matériau) qui comporte des moyens de fixation amovible, notamment par vissage ou par aimantation, pour fixer le dispositif de pulvérisation à un dispositif de chargement du matériau destiné à être chargé dans le réservoir, le matériau étant introduit dans le réservoir par passage par gravité dans la cheminée. Ainsi, en particulier pour de l'insecticide, l'opérateur n'a pas à manipuler l'insecticide qui passe du dispositif de chargement directement dans le réservoir sans aucun contact.

L'invention porte également sur un ensemble comprenant un dispositif de pulvérisation précité de l'invention, et un dispositif de chargement de matériau, le dispositif de chargement comprenant un réservoir de stockage et des moyens semi-automatisés de délivrance du matériau selon une quantité contrôlée.

Selon une caractéristique, le dispositif de chargement comporte une sortie de délivrance qui est apte à coopérer par fixation amovible avec l'extrémité libre dite aval de la cheminée, de préférence par aimantation, et qui est apte à délivrer le matériau par gravité et en particulier par un effet vibratoire, la sortie de délivrance comprenant un clapet automatisé d'ouverture et de fermeture.

La présente invention est maintenant décrite à l'aide d'exemples uniquement illustratifs et nullement limitatifs de la portée de l'invention, et à partir des illustrations jointes, dans lesquelles :
- [Fig. 1] représente une vue en perspective d'un exemple de réalisation du dispositif de pulvérisation selon l'invention.
- [Fig. 2] représente une vue schématique en coupe du dispositif de la figure 1.
- [Fig. 3] est une vue en perspective éclatée de la chambre comprenant une enveloppe externe et le réservoir avec son circuit d'écoulement d'air périphérique.
- [Fig. 4] correspond à une vue en perspective et de dessus de l'extrémité aval de la chambre du dispositif (enveloppe et réservoir de la figure 3 assemblés).
- [Fig. 5] est la vue opposée de la figure 4, correspondant à l'extrémité amont de la chambre.
- [Fig. 6] est une vue en perspective d'un dispositif de chargement du matériau à propulser et du dispositif de pulvérisation installé pour charger le réservoir.
- [Fig. 7] est un exemple de réalisation du dispositif de la figure 1 qui est amovible (entre la chambre et le bloc d'air pulsé) et est monté avec une perche (entre la chambre et le bloc d'air pulsé).

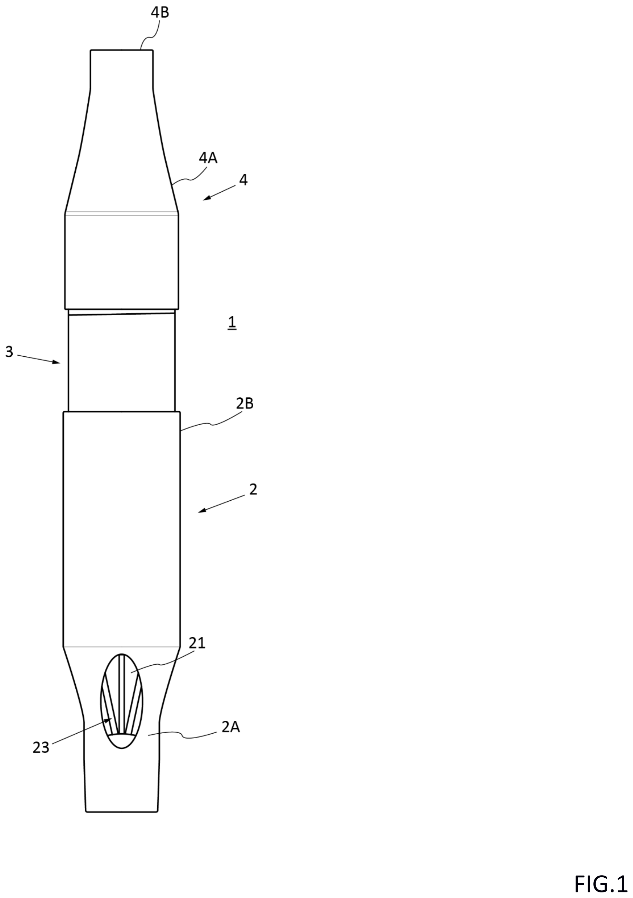

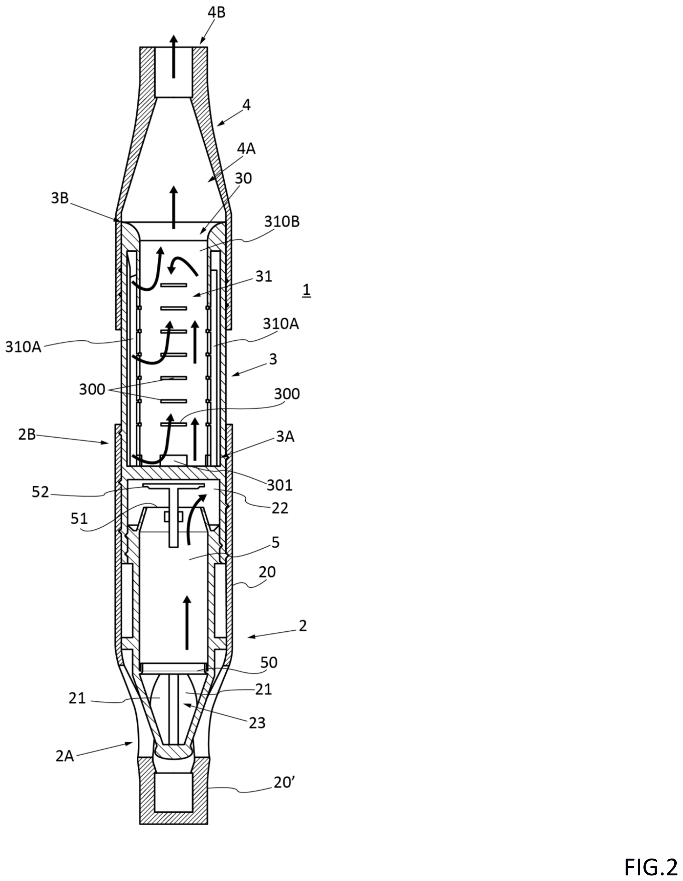

Le dispositif 1 de pulvérisation ou de projection de l'invention illustré sur les figures 1 et 2, est destiné à pulvériser un matériau pulvérulent ou en paillettes ou du type fragmentaire pouvant être aéroporté, voire même un liquide.

Le dispositif 1 peut notamment être utilisé pour pulvériser du produit insecticide en poudre. Les utilisations sont néanmoins très diverses.

Le dispositif 1 présente un corps général cylindrique, de préférence se terminant eux deux extrémités opposées par des formes tronconiques. Le dispositif 1 est en plusieurs parties, de préférence toutes amovibles et démontables entre elles. En particulier, le dispositif 1 comporte d'amont en aval, un bloc 2 d'air pulsé, une chambre 3 intermédiaire et une cheminée 4 de projection. La chambre 3 comprend en son intérieur un réservoir 30 et un circuit d'écoulement d'air 31 qui est périphérique au réservoir 30. La chambre 3 présente une extrémité amont 3A et une extrémité aval 3B. Le circuit d'écoulement d'air 31 communique, d'une part, avec le bloc 2 d'air pulsé (avec sa sortie d'expulsion d'air), et d'autre part, avec le réservoir 30 via des orifices traversants 300.

Le bloc d'air pulsé 2 comporte une enveloppe 20 qui loge un système d'aspiration et de soufflerie d'air 5 commandable à distance et qui comprend au moins une entrée d'air 21 en amont du bloc et connectée à la partie amont 50 du système d'aspiration et de soufflerie d'air, et une sortie d'expulsion d'air 22 en aval du bloc et connectée à la partie aval 51 du système d'aspiration et de soufflerie d'air 5. L'entrée d'air 21 communique directement avec l'extérieur du dispositif 1, avec l'air ambiant. L'entrée d'air 21 est de préférence couplée avec un filtre à air 23. Le système d'aspiration et de soufflerie d'air 5 peut éventuellement comprendre un clapet anti-retour 52. Le système d'air pulsé 2 est alimenté par une batterie de 12V.

Dans l'exemple illustré, l'enveloppe 20 du bloc 2 présente une extrémité amont 2A de forme tronconique comprenant une terminaison libre 20' plus étroite que le reste de corps du bloc afin d'y fixer un support de préhension longiligne tel qu'une perche (non illustrée). La terminaison libre 20' est fermée par rapport à l'entrée d'air 21. L'extrémité tronconique 2A est doté du filtre à air 23. L'enveloppe 20 du bloc 2 présente une extrémité aval 2B cylindrique creuse apte à chausser l'extrémité amont 3A de la chambre 3.

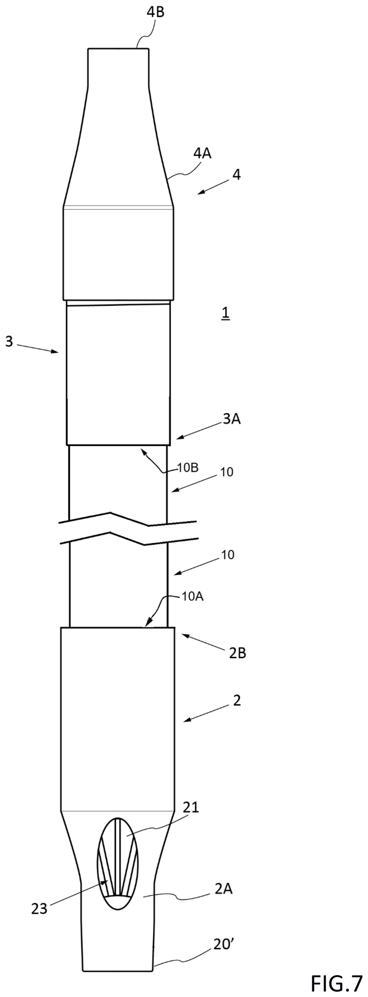

De préférence, comme indiqué plus haut les parties - bloc 2 d'air pulsé, chambre 3 intermédiaire et cheminée 4 de projection - sont toutes amovibles et démontables entre elles. Aussi, dans l'exemple de la figure 7, le dispositif comporte une perche 10 (amovible et rapportée) qui est creuse et présentant ses deux extrémités distales amont 10A et aval 10B ouvertes ou percées. La perche peut atteindre plusieurs mètres et être en plusieurs parties aboutées. La perche 10 est fixée de manière amovible entre le bloc 2 d'air pulsé et la chambre 3. L'extrémité amont 10A de la perche coopère par maintien mécanique avec l'extrémité aval 2B du bloc 2 d'air pulsé. Cette extrémité amont 10A ouverte ou percé communique avec la sortie d'expulsion d'air 22 aval du bloc 2 d'air pulsé. L'extrémité aval 10B de la perche coopère par maintien mécanique avec l'extrémité amont 3A de la chambre 3. Cette extrémité aval 10B de la perche ouverte ou percé communique avec la chambre 3, plus particulièrement avec le circuit d'écoulement d'air 31.

Le système d'aspiration et de soufflerie d'air 5 comprend un moteur, une turbine et des moyens électroniques de pilotage et de commande à distance. Le système d'aspiration et de soufflerie d'air 5 est un système d'air pulsé qui délivré de l'air sous pression au niveau de la sortie d'expulsion d'air 22. Eventuellement le système d'aspiration et de soufflerie d'air 5 peut comprendre le clapet anti-retour 24 au niveau de la sortie d'expulsion d'air 22. La sortie d'expulsion d'air 22 communique avec la chambre 3, plus particulièrement avec le circuit d'écoulement d'air 31.

La cheminée 4 est fixée par exemple par vissage autour de l'extrémité aval 3B de la chambre 3. La cheminée 4 est de préférence tronconique en étant convergente vers l'opposé de la chambre 3, à la manière d'une tuyère. La cheminée 4 est creuse d'une extrémité à l'autre et communique en son extrémité amont 4A avec le réservoir 30 et débouche librement à l'opposé en son extrémité aval 4B. L'extrémité libre 4B de la cheminée 4 peut être accessoirisée, par exemple avec un aiguillon rigide ou souple connu en soi dans le domaine de la destruction de nid de frelons.

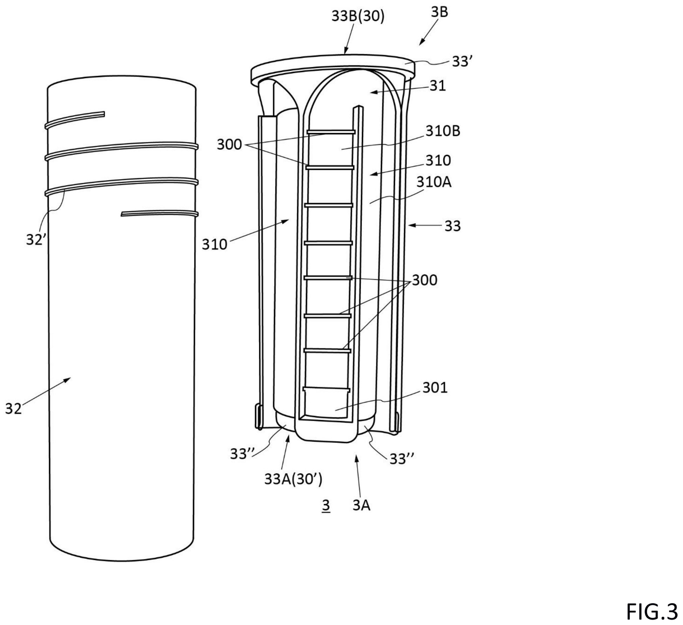

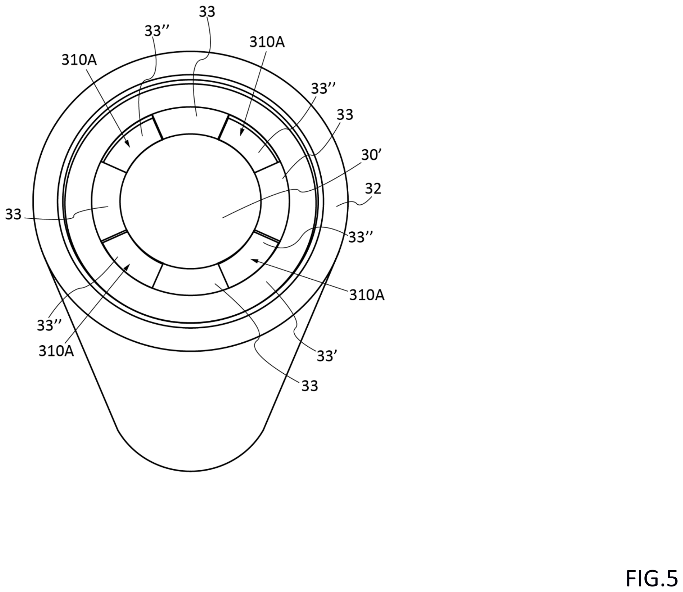

En regard plus particulièrement des figures 3 à 5, la chambre 3 est de forme cylindrique comprenant deux extrémités opposées amont 3A et aval 3B, une paroi externe 32 cylindrique et une paroi interne 33 cylindrique à distance de la paroi externe de sorte à ménager à l'intérieur de la paroi interne le réservoir 30, et entre la paroi externe 32 et la paroi interne 33, le circuit d'écoulement d'air 31.

La paroi externe 32 constitue l'enveloppe extérieure de la chambre 3. La paroi externe 32 forme un tube creux ouvert en ses deux extrémités amont et aval. La paroi externe 32 comprend autour de son extrémité aval un système de fixation amovible 32' tel qu'un filetage pour se visser avec la cheminée 4 qui comprend un taraudage associé.

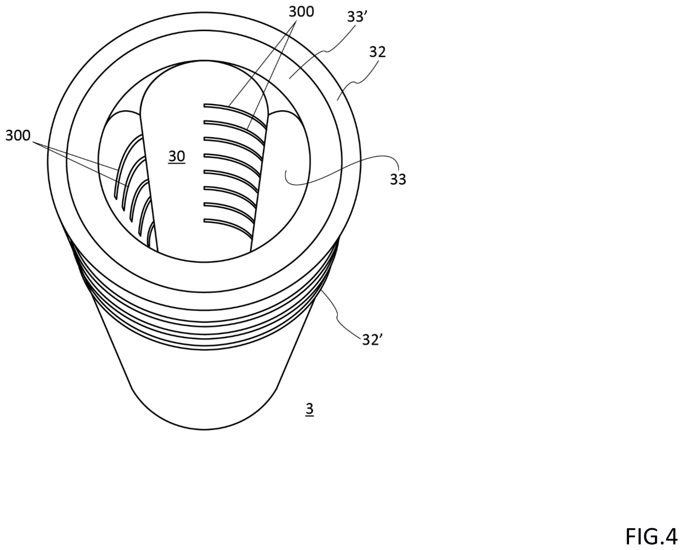

En extrémité aval 3B de la chambre 3, l'espace annulaire séparant la paroi interne 33 de la paroi externe 32 est totalement obturé, comme visible sur la figure 4. L'obturation de cet espace annulaire d'extrémité aval est par exemple réalisée par un épaulement périphérique 33' de la paroi interne 33. Ainsi, l'extrémité aval 3B de la chambre 3 est ouverte pour correspondre uniquement à l'intérieur du réservoir 30. Le circuit d'écoulement d'air 31 périphérique au réservoir 30 ne peut pas déboucher à l"extérieur de l'extrémité aval 3B de la chambre 3.

La paroi interne 33 délimite intérieurement le réservoir 5 et présente une extrémité amont 33A fermée, qui correspond au fond 30' fermé du réservoir (figure 4), et une extrémité aval 33B qui est ouverte qui correspond à l'entrée du réservoir 30 (figure 3). L'entrée du réservoir 30 coopère directement avec la cheminée 4. L'entrée du réservoir 30 correspond à la section totale de l'intérieur du réservoir.

En regard de la figure 3, le circuit d'écoulement d'air 31 comporte au moins un canal, de préférence plusieurs canaux 310 s'étendant selon la longueur de la chambre 3. Les canaux 310 sont dessinés entre la paroi externe 32 et la paroi interne 33 par des cavités borgnes longitudinales dans l'épaisseur de la paroi 33 et par des ouvertures ou décrochements 33" espacés dans l'épaisseur du chant de la paroi à l'extrémité amont 3A.

Dans l'exemple préféré illustré, chaque canal longitudinal 310 dessine dans la paroi interne 33 un chemin d'écoulement d'air en U retourné, la courbe du U étant à proximité de l'extrémité aval 33B (la courbe du U étant fermée par l'épaulement 33'), et le U présentant :
- une première aile 310A qui part de l'extrémité amont de la chambre 3, depuis une ouverture 33" du chant aval de la paroi 33 et qui est destinée à être en communication avec la sortie d'expulsion d'air 22, cette première aile est à paroi de fond fermée, c'est-à-dire que la paroi 33 du réservoir 30 est pleine et dépourvue de passages traversants avec ledit réservoir, et cette première aile s'étendant dans le sens longitudinal de la paroi cylindrique 33 ;
- une seconde aile 310B parallèle à la première aile 310A, cette seconde aile 310B qui présente sa paroi de fond correspondant à la paroi 33 du réservoir, comprenant les passages traversants 300 et s'étendant le long du réservoir en se terminant en extrémité amont 3A au niveau du chant plein de la paroi 33.

Les passages traversants 300 sont de préférence des fentes étagées sur la longueur ou hauteur du réservoir 30 et de direction perpendiculaire à la direction longitudinale du réservoir. A titre d'exemples dimensionnels nullement limitatifs, en particulier pour une utilisation de réservoir d'insecticide :
- le réservoir 30 présente pour contenir jusqu'à 40 g de matériau en poudre, une hauteur de l'ordre de 100 mm et un diamètre de l'ordre de 30 mm ;
- les fentes 300 ont une largeur (direction de la hauteur) de 2 mm 4 mm
- la longueur des fentes (direction perpendiculaire à la direction longitudinale du réservoir) correspond à la largeur de la seconde aile 310B du canal d'écoulement d'air, par exemple de l'ordre de 15 mm ; 4 rangées
- les fentes sont étagées en étant distantes par exemple de l'ordre de 10 mm ;
- les fentes sont réparties en quatre canaux longitudinaux équidistants autour du réservoir.

Il va de soi que l'ensemble des éléments du dispositif de pulvérisation et notamment le réservoir quant à sa taille seront adaptés dimensionnellement en fonction de l'utilisation.

De préférence, le réservoir comporte une fente 301 d'extrémité inférieure à proximité immédiate du fond qui est plus large que les autres fentes 300.

Le fonctionnement du dispositif 1 est le suivant. Du matériau à propulser a été introduit dans le réservoir 30. Le dispositif 1 est porté par une main de l'opérateur ou est disposé en haut d'une perche portée par la main de l'utilisateur. Le système 2 à air pulsé est mis en route par un bouton d'une télécommande qui est par exemple dans l'autre main de l'utilisateur. Le système à air pulsé 2 aspire de l'air ambiant par l'entrée 21 et propulse l'air en sortie d'expulsion 22. L'air propulsé par le système à air pulsé 2 qui est déjà en partie comprimé, chemine d'abord le long de la première aile 310A à paroi fermée dont la section plus étroite que la sortie d'expulsion 22 permet encore d'augmenter la vitesse de l'air et de le comprimer, puis en arrivant dans la seconde aile 310B, va passer tour au tour par chaque fente 300 étagée d'aval en amont en propulsant le matériau hors du réservoir vers la cheminée 4, et cela au fur et à mesure depuis le haut (partie aval) du réservoir jusqu'en bas en terminant par la fente la plus basse 301 du réservoir pour faire remonter le matériau jusqu'en extrémité aval ou sortie du réservoir.

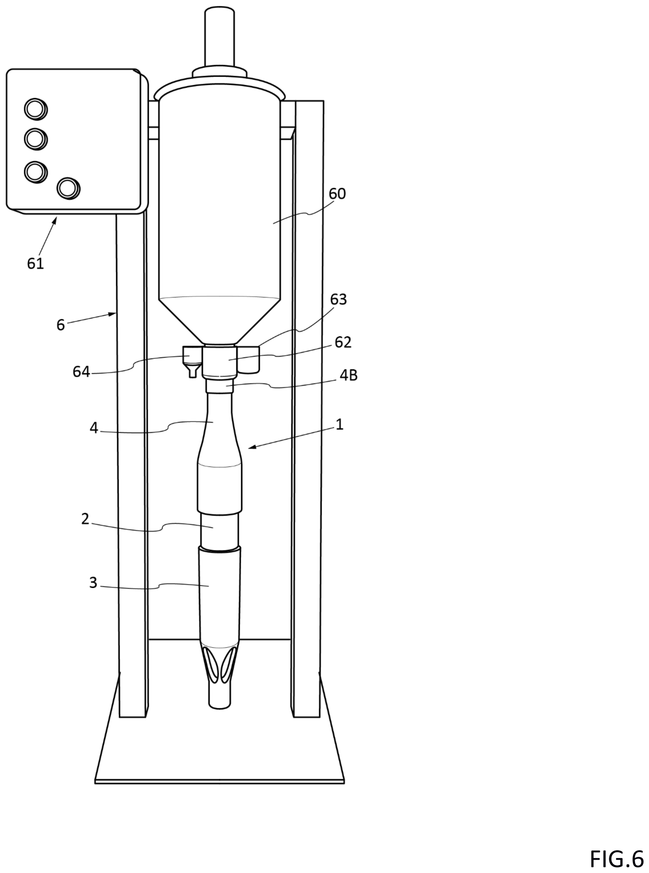

Par ailleurs, le chargement du réservoir 30 peut se faire en démontant la cheminée 4 et en versant le matériau dans le réservoir 30 de la chambre 3. Dans une variante, en particulier pour éviter tout contact avec le matériau, l'invention propose un dispositif de chargement 6 semi-automatique illustré en figure 6. La cheminée 4 n'a pas besoin d'être démontée. Elle comprend avantageusement en extrémité aval 4B un système d'accouplement avec le dispositif de chargement 6, de préférence un système par aimantation.

Le dispositif de chargement 6 comporte un réservoir de stockage 60, un boitier de commande 61, une sortie de délivrance 62 positionnée vers le bas en position de chargement. Le matériau stocké dans le réservoir de stockage est destiné à tomber par gravité via la sortie de délivrance 62, et de préférence par un effet vibratoire (le dispositif de chargement comprenant un vibreur). Le dispositif de chargement 6 comporte un clapet pivotant 63 d'ouverture et de fermeture de la sortie de délivrance 62, qui est piloté par le boîtier de commande. Le dispositif de pulvérisation 1 se fixe de manière amovible à la sortie de délivrance 62. C'est directement l'extrémité libre 4B de sortie de la cheminée 4 qui est connectée à la sortie de délivrance 62 du dispositif de chargement. La fixation se fait par exemple par aimantation. De préférence, le dispositif de chargement 6 comporte en outre un réceptacle 64 apte à récupérer du matériau à la fermeture/réouverture du clapet 63 et lorsque le dispositif de pulvérisation 1 est retiré, afin d'éviter toute perte de produit dans l'environnement extérieur. Le réceptacle 64 sera vidé ultérieurement de manière appropriée pour éviter toute pollution de l'environnement. Le dispositif de chargement 6, en tout cas pour une utilisation pour insecticide, est nomade ; il est portable et est transportable dans un véhicule. Sur site, l'opérateur charge le dispositif de pulvérisation 1 à partir du dispositif de chargement 6 qui est dans son véhicule, la dose de matériau délivré étant juste celle nécessaire à l'intervention (le réservoir 30 du dispositif de pulvérisation n'ayant pas forcément besoin d'être entièrement rempli) ; l'opérateur n'a pas du tout eu à manipuler l'insecticide. Puis l'opérateur se déplace à pied jusqu'à la zone à traiter en portant à la main le dispositif de pulvérisation 1 rempli de la dose appropriée et le fixe si besoin par son extrémité 20' sur une perche et l'accessoirise éventuellement au niveau de l'extrémité libre 4B de la cheminée 4. Pour propulser le matériau, l'opérateur met en route le système d'air pulsé 5 du dispositif de pulvérisation via la télécommande et peut le stopper à tout moment en réappuyant sur la télécommande.

## Revendications

1. Dispositif (1) de pulvérisation ou de projection pour matériau pulvérulent ou en paillettes ou du type fragmentaire, voire même liquide, pouvant être aéroporté, le dispositif comportant d'amont en aval :
- des moyens d'alimentation en air comprimé,
- un réservoir (30) destiné à accueillir du matériau à pulvériser,
- une cheminée (4) aval de projection communiquant avec le réservoir (30),
- le réservoir (30) étant logé dans une chambre qui est agencée entre les moyens d'alimentation en air comprimé et la cheminée (4), et
- les moyens d'alimentation en air comprimé comportant un bloc d'air pulsé (2) et un circuit (31) d'écoulement d'air comprimé, le circuit (31) communiquant avec le bloc d'air pulsé (2) et étant agencé et prisonnier de l'intérieur de la chambre (3) tout en étant à l'extérieur du réservoir (30) et s'étendant sur la longueur du réservoir et tout autour de celui-ci, tandis que le réservoir (30) comprend des passages traversants (300) qui débouchent dans le circuit d'écoulement d'air (31).

2. Dispositif selon la revendication 1, **caractérisé en ce que** le réservoir (30) comprend un fond fermé (30'), une paroi dite interne (33) qui est à distance de la paroi externe (32) de la chambre et une extrémité aval (33B) communiquant avec la cheminée (4), et le circuit d'écoulement d'air (31) comprend une pluralité de canaux longitudinaux d'écoulement d'air ménagés dans l'épaisseur de la paroi interne (33) et selon la longueur du réservoir, les canaux longitudinaux comprenant une partie (310A) communiquant avec une sortie d'expulsion d'air (22) du bloc d'air pulsé et une partie (310B) comprenant les passages traversants (300, 301), les deux parties du canal étant cloisonnées sauf en une extrémité qui est opposée à la sortie d'expulsion d'air (22).

3. Dispositif selon la revendication 1 ou 2, **caractérisé en ce que** les passages (300, 301) traversants sont des fentes espacées qui sont disposées sur le pourtour du réservoir et qui sont étagées selon la longueur du réservoir.

4. Dispositif selon les revendications 2 ou 3, **caractérisé en ce que** chaque canal d'écoulement d'air dessine un canal longitudinal en U retourné, avec
- une première aile (310A) qui part de l'extrémité amont de la chambre en communication avec la sortie d'expulsion d'air, qui est à paroi fermée avec la paroi du réservoir et qui s'étend selon la longueur du réservoir jusqu'à l'extrémité de la courbure du U,
- une seconde aile (310B) qui est dans la continuité de la courbure du U et est parallèle à la première aile, qui comprend les passages traversants et qui s'étend le long du réservoir en se terminant en extrémité amont de la chambre de manière obturée.

5. Dispositif selon l'une quelconque des revendications 2 et 3, **caractérisé en ce que** les fentes (301) qui sont disposées à proximité du fond du réservoir, au moins pour les fentes de l'étage le plus proche du fond, présentent une section plus grande que la section des autres fentes (300).

6. Dispositif selon l'une quelconque des revendications précédentes, **caractérisé en ce que** le bloc d'air pulsé (2) comporte un système d'aspiration et de soufflerie d'air (5) qui comprend un moteur, une turbine et des moyens électroniques de pilotage et de contrôle à distance.

7. Dispositif selon l'une quelconque des revendications précédentes, **caractérisé en ce que** le bloc d'air pulsé (2) comporte au moins une arrivée d'air (21) qui est couplée à un filtre à air (23).

8. Dispositif selon l'une quelconque des revendications précédentes, **caractérisé en ce que** la cheminée (4) est convergente vers l'aval, à la manière d'une tuyère.

9. Dispositif selon l'une quelconque des revendications précédentes, **caractérisé en ce que** la cheminée (4) présente une extrémité aval (4B) qui comporte des moyens de fixation amovible, notamment par vissage ou par aimantation, pour la fixation d'un accessoire choisi parmi des accessoires qui sont fonction de l'utilisation du dispositif, tels que des aiguillons rigides, flexibles pour le traitement de nid de frelons ou de guêpes ou pour la fixation du dispositif de pulvérisation à un dispositif de chargement (6) du matériau destiné à être chargé dans le réservoir.

10. Dispositif selon l'une quelconque des revendications précédentes, **caractérisé en ce qu'**il comporte une perche amovible qui est fixée à une terminaison libre (20') du bloc (2) d'air pulsé, à l'opposé de la sortie d'expulsion d'air (22).

11. Dispositif selon l'une quelconque des revendications 1 à 9, **caractérisé en ce qu'**il comporte une perche (10) amovible qui est creuse et présente deux extrémités distales amont (10A) et aval (10B) ouvertes ou percées, la perche étant fixée de manière amovible entre le bloc (2) d'air pulsé et la chambre (3), les deux extrémités distales amont (10A) et aval (10B) ouvertes ou percées communiquant respectivement avec, le bloc (2) d'air pulsé et la chambre (3).

12. Dispositif selon l'une quelconque des revendications précédentes, **caractérisé en ce que** la chambre (3) et la cheminée (4) sont amovibles, et de préférence le réservoir (30) est démontable par rapport à la chambre (3).

13. Ensemble comprenant un dispositif (1) de pulvérisation selon l'une quelconque des revendications précédentes, et un dispositif de chargement (6) de matériau, le dispositif de chargement (6) comprenant un réservoir de stockage (60) et des moyens semi-automatisés (61) de délivrance du matériau selon une quantité contrôlée.

14. Ensemble selon la revendication précédente, **caractérisé en ce que** le dispositif de chargement (6) comporte une sortie de délivrance (62) qui est apte à coopérer par fixation amovible avec l'extrémité libre dite aval (4B) de la cheminée, de préférence par aimantation, et qui est apte à délivrer le matériau par gravité et en particulier par un effet vibratoire, la sortie de délivrance comprenant un clapet automatisé d'ouverture et de fermeture.
